# EUROPEAN PATENT APPLICATION

(11) **EP 4 838 611 A1**
(43) Date of publication of application: **11.11.2026**
(21) Application number: 24938451.2
(22) Date of filing: 13.08.2024
(51) Int. Cl.: H01M 10/0583

(54) **LAMINATION MECHANISM, LAMINATION METHOD, AND BATTERY MANUFACTURING DEVICE**

(30) Priority: 11.05.2024 CN 202410581814
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: WEI, Jingjing, Ningde, Fujian 352100 (CN); WANG, Jianlei, Ningde, Fujian 352100 (CN); LIAO, Ruhu, Ningde, Fujian 352100 (CN); DAI, Ya, Ningde, Fujian 352100 (CN); LIN, Jiang, Ningde, Fujian 352100 (CN); GONG, Youlai, Ningde, Fujian 352100 (CN)
(74) Representative: Lorenz Seidler Gossel Part. mbB
(86) International application number: PCT/CN2024/111669
(87) International publication number: WO 2025/236437

(57) **Abstract**

The present application provides a lamination mechanism, a lamination method, and a battery manufacturing device. The lamination mechanism comprises a support assembly, an air blowing assembly, and a pressing assembly, the support assembly is provided with a bearing area, the bearing area is configured to support a plurality of electrode laminates stacked in a first direction, and a gap in the first direction is formed between an electrode laminate located at the uppermost layer and an electrode laminate adjacent thereto. The air blowing assembly is arranged on the support assembly and is configured to blow air into the gap from the two sides of the bearing area in a second direction, so that the electrode laminate at the uppermost layer and the electrode laminate adjacent thereto are separated in the first direction, wherein the second direction intersects with the first direction. The pressing assembly is arranged opposite to at least part of the bearing area of the support assembly in the first direction, and the pressing assembly has a degree of freedom of motion relative to the support assembly in the first direction so as to press the electrode laminate located at the uppermost layer. The lamination mechanism in embodiments of the present application can improve the smoothing effect for the electrode laminates, and improve performance of a laminated cell.

## Description

### CROSS-REFERENCE TO RELATED APPLICATIONS

This application claims priority to Chinese Patent Application No. 202410581814.2 filed on May 11, 2024 and entitled "STACKING MECHANISM, STACKING METHOD, AND BATTERY MANUFACTURING DEVICE", which is incorporated herein by reference in its entirety.

### TECHNICAL FIELD

This application pertains to the technical field of battery production, and particularly relates to a stacking mechanism, a stacking method, and a battery manufacturing device.

### BACKGROUND

At present, due to the advantages of high-rate capability and high energy density of stacked cells, and since stacked cells can also be made into various shaped batteries according to different needs, they have been increasingly widely used.

In the manufacturing process of stacked cells, it is necessary to freely stack composite material strips formed by compounding to form multiple electrode stacks, and then to form stacked cells by smoothing the electrode stack at the uppermost layer. Due to the structural limitations of stacked cells, after free stacking, an arching occurs at the corner between the electrode stack at the uppermost layer and the electrode stack adjacent thereto, which causes wrinkling on the large surface of the electrode stack at the uppermost layer during smoothing, resulting in failure of smoothing. Therefore, how to improve the smoothing effect of electrode stacks has become an urgent problem to be solved.

### SUMMARY

In view of the above problems, this application provides a stacking mechanism, a stacking method, and a battery manufacturing device, which can improve the smoothing effect and enhance the performance of stacked cells.

In a first aspect, this application provides a stacking mechanism, including a support assembly, an air blowing assembly, and a pressing assembly. The support assembly has a bearing region, where the bearing region is configured to support multiple electrode stacks stacked along a first direction, and an electrode stack at an uppermost layer and an electrode stack adjacent thereto form a gap along the first direction. The air blowing assembly is disposed on the support assembly and configured to blow air into the gap from both sides of the bearing region along a second direction, so as to separate the electrode stack at the uppermost layer and the electrode stack adjacent thereto along the first direction, the second direction intersecting the first direction. The pressing assembly is disposed opposite to at least part of the bearing region of the support assembly along the first direction, where the pressing assembly has a degree of freedom of movement along the first direction relative to the support assembly, to press and hold the electrode stack at the uppermost layer.

In embodiments of this application, the air blowing assembly and the pressing assembly cooperate with each other, the air blowing assembly is configured to blow air into the gap between the electrode stack at the uppermost layer and the electrode stack adjacent thereto, to eliminate the arching at the corner so that the two are separated along the first direction. At this time, the electrode stack is smoothed by the pressing assembly, which can eliminate wrinkling on the large surface of the electrode stack and improve the smoothing effect.

In some embodiments, the air blowing assembly includes multiple air outlets, the multiple air outlets are separately disposed on both sides of the bearing region along the second direction, axis directions of the air outlets intersect, and an intersection point is located outside the bearing region.

In some embodiments, in the second direction, the air outlets on both sides of the bearing region are symmetrically disposed, and the axis directions of the air outlets are symmetric with respect to the bearing region.

In some embodiments, the stacking mechanism further includes a limiting portion, and the limiting portion is disposed on the support assembly, and partially blocks one side edge of the bearing region intersecting with the axis directions of the air outlets.

In some embodiments, the air blowing assembly includes multiple air blowing members, and the air blowing members each have an air outlet.

In some embodiments, the pressing assembly includes a driving member and a pressing plate, and the driving member is connected to the pressing plate and drives the pressing plate to move linearly relative to the support assembly along the first direction, or the driving member is connected to the pressing plate and drives the pressing plate to rotate toward or away from the support assembly.

In some embodiments, the driving member includes a driving portion and a rotating shaft disposed at an output end of the driving portion, the rotating shaft is disposed on one side of the support assembly along a third direction and extends along the second direction, and the pressing plate is connected to the rotating shaft. Along the third direction, the air blowing assembly blows air from a side close to the rotating shaft to a side away from the rotating shaft, the third direction intersecting the first direction and the second direction.

In some embodiments, a ratio of a distance between an edge of the pressing plate and the rotating shaft to a dimension of the bearing region along the third direction is greater than or equal to 0.2.

In some embodiments, the stacking mechanism further includes a base, and the support assembly is connected to the base and has a degree of freedom of movement along the first direction relative to the base.

In a second aspect, embodiments of this application provide a stacking method, including: providing the stacking mechanism of the first aspect, and stacking multiple electrode stacks along a first direction in a bearing region of the support assembly; blowing, by an air blowing assembly, air into a gap between an electrode stack at an uppermost layer and an electrode stack adjacent thereto, so as to separate the electrode stack at the uppermost layer and the electrode stack adjacent thereto; and pressing, by a pressing assembly, the electrode stack at the uppermost layer, so that the electrode stack at the uppermost layer and the electrode stack adjacent thereto are attached to each other to form a stacked cell.

In some embodiments, in the step of providing the stacking mechanism, the support assembly has a degree of freedom of movement along the first direction, the pressing assembly includes a driving member and a pressing plate, and the driving member is connected to the pressing plate and drives the pressing plate to rotate toward or away from the support assembly. The step of pressing, by a pressing assembly, the electrode stack at the uppermost layer includes: controlling the pressing plate to rotate toward the support assembly, so that a preset included angle is formed between the pressing plate and a plane where the support assembly is located; controlling the support assembly to move toward the pressing plate along the first direction until the electrode stack at the uppermost layer comes into contact with the pressing plate; and synchronously controlling the pressing plate to rotate toward the support assembly and controlling the support assembly to move away from the pressing plate along the first direction, and pressing, by the pressing plate, the electrode stack at the uppermost layer until the pressing plate is parallel to the plane where the support assembly is located.

In some embodiments, the preset included angle is 20° to 70°.

In a third aspect, embodiments of this application provide a battery manufacturing device, including a compounding mechanism and the stacking mechanism in the second aspect, where the compounding mechanism is configured for forming a composite material strip, and the stacking mechanism is disposed downstream of the compounding mechanism, and is configured to press electrode stacks formed by folding the composite material strip to form a stacked cell.

The stacking mechanism according to embodiments of this application includes a support assembly, an air blowing assembly, and a pressing assembly. The support assembly has a bearing region, where the bearing region is configured to support multiple electrode stacks stacked along a first direction, and an electrode stack at an uppermost layer and an electrode stack adjacent thereto form a gap along the first direction. Through cooperation of the air blowing assembly and the pressing assembly, the air blowing assembly can blow air from both sides of the bearing region along the second direction into the gap between the electrode stack at the uppermost layer and the electrode stack adjacent thereto, to smooth the arching at the corner between the electrode stack at the uppermost layer and the electrode stack adjacent thereto, and to separate the vacuum bonded portion between the two electrode stacks, so that the two are separated along the first direction. Then, when the electrode stack at the uppermost layer is pressed and held by the pressing assembly, the electrode stack at the uppermost layer can be smoothly pressed onto the electrode stack adjacent thereto, reducing or even eliminating wrinkling of the electrode stack at the uppermost layer, improving the smoothing effect, and enhancing the performance of the stacked cell.

### BRIEF DESCRIPTION OF DRAWINGS

In order to more clearly illustrate the technical solutions of the embodiments of this application, the accompanying drawings to be used in the embodiments of this application are briefly described below. Obviously, the accompanying drawings described below are only some embodiments of this application. For those of ordinary skill in the art, other accompanying drawings can also be obtained based on these drawings without creative efforts.
FIG. 1 is a schematic structural diagram of a stacked cell provided in some embodiments of this application;
FIG. 2 is a schematic diagram of smoothing a stacked cell provided in some embodiments of this application;
FIG. 3 is a schematic structural diagram of a stacking mechanism provided in some embodiments of this application;
FIG. 4 is a top view of a stacking mechanism provided in some embodiments of this application;
FIG. 5 is a schematic diagram of an air blowing route of an air blowing assembly provided in some embodiments of this application;
FIG. 6 is a top view of a pressing assembly provided in some embodiments of this application;
FIG. 7 is a flowchart of a stacking method provided in some embodiments of this application; and
FIG. 8 is a schematic diagram of steps in a stacking method provided in some embodiments of this application.

In the accompanying drawings, the drawings are not necessarily drawn to actual scale.

### Reference numerals:

10. stacking mechanism, 20. electrode stack;
1. support assembly, 11. support plate, 12. stacking platform, 121. limiting portion, 2. air blowing assembly, 21. air blowing member, 211. air outlet, 3. pressing assembly, 31. driving member, 311. driving portion, 312. rotating shaft, 32. pressing plate, 4. base;
X. second direction, Y. third direction, and Z. first direction.

### DESCRIPTION OF EMBODIMENTS

The embodiments of the technical solutions of this application will be described in detail below in conjunction with the accompanying drawings. The following embodiments are only used to illustrate the technical solutions of this application more clearly, and thus are only examples and do not limit the protection scope of this application.

It should be noted that, unless otherwise specified, the technical terms or scientific terms used in the embodiments of this application shall have the usual meanings understood by those skilled in the art to which the embodiments of this application pertain.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the accompanying drawings, and are only for facilitating the description of the embodiments of this application and simplifying the description, rather than indicating or implying that the means or element referred to must have a specific orientation, be constructed and operated in a specific orientation, and therefore cannot be understood as limiting the embodiments of this application.

In addition, the technical terms "first", "second", and the like are only used for descriptive purposes, and cannot be understood as indicating or implying relative importance or implicitly indicating the number of technical features indicated. In the description of the embodiments of this application, the meaning of "multiple" is two or more, unless specifically defined otherwise.

In the description of the embodiments of this application, unless otherwise clearly specified and limited, the technical terms "mounting", "connecting", "join", "fixing", and the like should be understood in a broad sense. For example, they may be a fixed connection, a detachable connection, or an integrated connection; they may be a mechanical connection or an electrical connection; they may be a direct connection or an indirect connection through an intermediary; or they may be the internal communication of two elements or the interaction relationship between two elements. For those of ordinary skill in the art, the specific meanings of the above terms in the embodiments of this application can be understood according to specific circumstances.

In the description of the embodiments of this application, unless otherwise clearly specified and limited, a first feature being "on" or "under" a second feature may be that the first and second features are in direct contact, or the first and second features are in indirect contact through an intermediary. Moreover, the first feature being "above", "over", and "on" the second feature may be that the first feature is directly above or obliquely above the second feature, or merely indicates that the horizontal height of the first feature is higher than the second feature. The first feature being "below", "under", and "beneath" the second feature may be that the first feature is directly below or obliquely below the second feature, or merely indicates that the horizontal height of the first feature is less than the second feature.

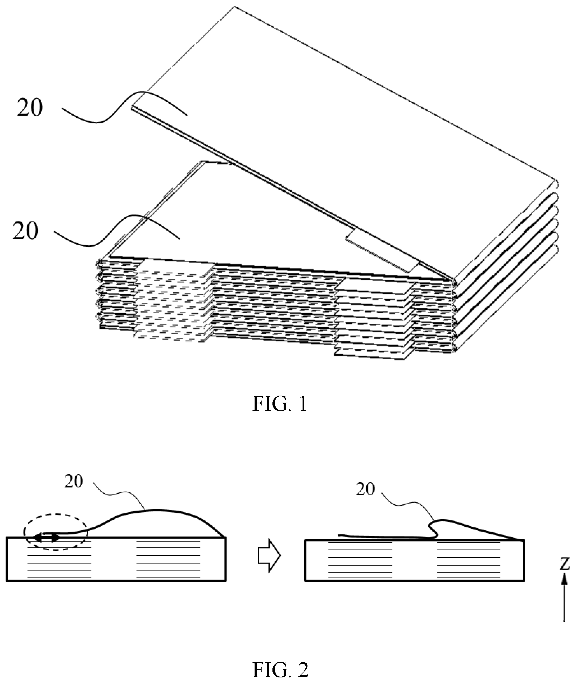

To facilitate understanding of the technical solutions of the embodiments of this application, a stacking mechanism, a stacking method, and a battery manufacturing device in the embodiments of this application are described in detail below in conjunction with FIGs. 1 to 8.

As the most representative energy storage device in the new energy field, batteries have been increasingly widely used in mobile electronic devices, electric vehicles, energy storage, and other fields. According to different preparation processes, the cells in batteries can be divided into wound cells and stacked cells. Since stacked cells have the advantages of high-rate capability and high energy density and stacked cells can also be made into various shaped batteries according to different needs, they have been increasingly widely used.

Refer to FIG. 1 and FIG. 2. FIG. 1 is a schematic structural diagram of a stacked cell in some embodiments of this application, and FIG. 2 is a schematic diagram of smoothing a stacked cell in some embodiments of this application.

Taking the manufacturing process of stacked cells as an example, the manufacturing steps are as follows: First, an anode, a separator, and a cathode are rolled and compounded to form an anode-cathode composite material strip, and then the anode-cathode composite material strip is reciprocally stacked in a Z-shape to obtain multiple electrode stacks 20. After the tail piece of the anode-cathode composite material strip is cut off and freely falls to form the electrode stack 20 at the uppermost layer, the electrode stack 20 at the uppermost layer is smoothed, and finally the stacked cell is formed.

In related stacked cells, among the multiple electrode stacks 20 obtained by stacking, the electrode stack 20 located in the middle piece is formed by compounding the anode, the separator, and the cathode, while the electrode stack 20 at the uppermost layer, that is, the tail piece of the anode-cathode composite material strip, is formed by compounding only the anode and the separator. Since the tail piece has no cathode, the weight of the tail piece is relatively light. When the tail piece is cut off and freely falls to form the electrode stack 20 at the uppermost layer, a relatively large friction force is generated between the separator of the electrode stack 20 at the uppermost layer and the cathode of the electrode stack 20 adjacent thereto, and vacuum bonding is likely to be formed, resulting in arching at the corner between the electrode stack 20 at the uppermost layer and the electrode stack 20 adjacent thereto. At this time, directly smoothing the electrode stack 20 at the uppermost layer causes wrinkling on the large surface of the electrode stack 20 at the uppermost layer, resulting in failure of smoothing and affecting the performance of the stacked cell.

Based on the above considerations, in order to improve the performance of the stacked cell, embodiments of this application provide a stacking mechanism 10. After the tail piece is cut off and freely falls to form the electrode stack 20 at the uppermost layer, the air blowing assembly 2 can blow air through the space between the electrode stack 20 at the uppermost layer and the electrode stack 20 adjacent thereto, so that the electrode stack 20 at the uppermost layer and the electrode stack 20 adjacent thereto are separated from each other. At this time, smoothing is performed, which can eliminate wrinkling on the large surface of the electrode stack 20 and improve the smoothing effect.

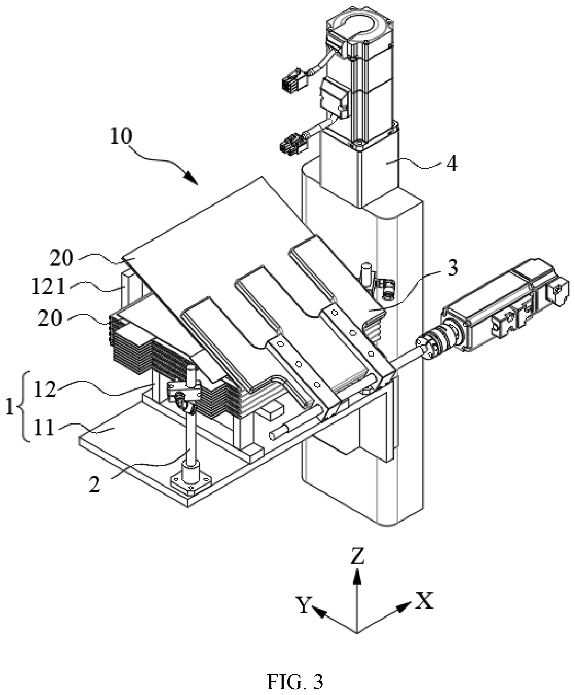

Referring to FIG. 3, FIG. 3 is a schematic structural diagram of a stacking mechanism 10 provided in some embodiments of this application. Embodiments of this application provide a stacking mechanism 10, including a support assembly 1, an air blowing assembly 2, and a pressing assembly 3. The support assembly 1 has a bearing region, where the bearing region is configured to support multiple electrode stacks 20 stacked along a first direction Z, and an electrode stack 20 at an uppermost layer and an electrode stack 20 adjacent thereto form a gap along the first direction Z. The air blowing assembly 2 is disposed on the support assembly 1 and configured to blow air into the gap from both sides of the bearing region along a second direction X, so as to separate the electrode stack 20 at the uppermost layer and the electrode stack 20 adjacent thereto along the first direction Z, the second direction X intersecting the first direction Z. The pressing assembly 3 is disposed opposite to at least part of the bearing region of the support assembly 1 along the first direction Z, and the pressing assembly 3 has a degree of freedom of movement along the first direction Z relative to the support assembly 1, to press and hold the electrode stack 20 at the uppermost layer.

The support assembly 1 is configured to support multiple electrode stacks 20 freely stacked. In some embodiments, the support assembly 1 may include a support plate 11 and a stacking platform 12 disposed on the support plate 11, the air blowing assembly 2 may be disposed on the support platform, and by conveying the anode-cathode composite material strip to the stacking platform 12, multiple electrode stacks 20 can be freely stacked along the first direction Z on the stacking platform 12.

The bearing region refers to a region on the stacking platform 12 for bearing the electrode stack 20, and its specific range can be determined according to the electrode stack 20 borne on the support assembly 1, that is, the orthographic projection of the electrode stack 20 along the first direction Z on the support assembly 1 coincides with the bearing region, to achieve support for multiple electrode stacks 20.

The first direction Z may be the thickness direction of the electrode stack 20, for example, it may be the vertical direction, and the second direction X may be the width direction of the electrode stack 20, specifically referring to the extension direction of the corner between the electrode stack 20 at the uppermost layer and the electrode stack 20 adjacent thereto.

According to the stacking mechanism 10 in embodiments of this application, through cooperation of the air blowing assembly 2 and the pressing assembly 3, the air blowing assembly 2 can blow air from both sides of the bearing region along the second direction X into the gap between the electrode stack 20 at the uppermost layer and the electrode stack 20 adjacent thereto, to smooth the arching at the corner between the electrode stack 20 at the uppermost layer and the electrode stack 20 adjacent thereto, and to separate the vacuum bonded portion between the two electrode stacks 20, so that the two are separated along the first direction Z. Then, when the electrode stack 20 at the uppermost layer is pressed and held by the pressing assembly 3, the electrode stack 20 at the uppermost layer can be smoothly pressed onto the electrode stack 20 adjacent thereto, reducing or even eliminating wrinkling of the electrode stack 20 at the uppermost layer, improving the smoothing effect, and enhancing the performance of the stacked cell.

It can be understood that when the air blowing assembly 2 blows air from both sides of the bearing region along the second direction X into the bearing region simultaneously, the electrode stack 20 at the uppermost layer can be blown up, and the balance of forces on both sides of the electrode stack 20 can be improved, thereby reducing the risk of the electrode stack 20 tilting toward one side along the second direction X, and further improving the reliability of smoothing the electrode stack 20 at the uppermost layer.

Optionally, the balance on both sides of the electrode stack 20 can be improved by controlling the same air blowing amount and/or the same air speed on both sides of the air blowing assembly 2 along the second direction X.

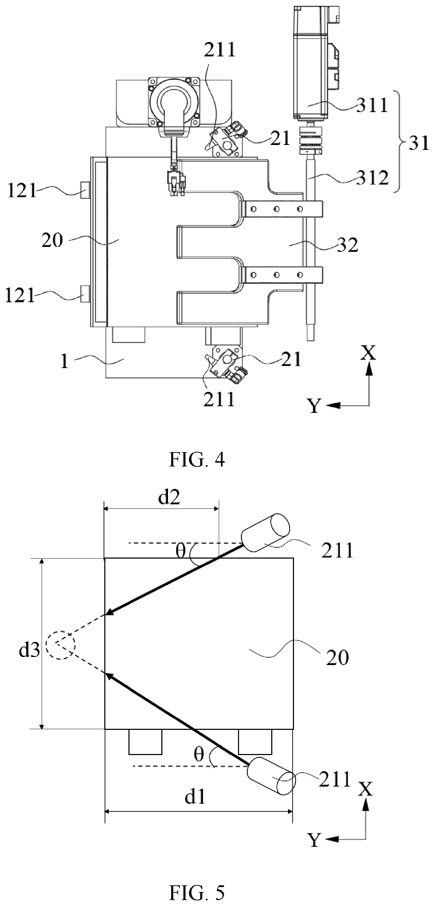

Referring to FIG. 3 to FIG. 5, FIG. 4 is a top view of a stacking mechanism 10 provided in some embodiments of this application, and FIG. 5 is a schematic diagram of an air blowing route of an air blowing assembly 2 provided in some embodiments of this application. In some optional embodiments, the air blowing assembly 2 includes multiple air outlets 211, the multiple air outlets 211 are separately disposed on both sides of the bearing region along the second direction X, axis directions of the air outlets 211 intersect, and an intersection point is located outside the bearing region.

By making the air blowing assembly 2 include multiple air outlets 211, air is injected into the gap between the electrode stack 20 at the uppermost layer and the electrode stack 20 adjacent thereto through all the multiple air outlets 211, and by separately disposing the multiple air outlets 211 on both sides of the bearing region along the second direction X, air is injected into the gap from both sides of the electrode stack 20, improving the stability of the electrode stack 20 after it is blown up.

The axis direction of the air outlet 211 refers to the air path direction of the air ejected from the air outlet 211. When the air outlet 211 is provided as a rotary body such as a cylinder or a cone, the axis direction of the air outlet 211 is the axis direction of the rotary body. When the air outlet 211 is provided as a polygonal body or other irregular body, the axis direction of the air outlet 211 refers to the axis direction of the circumscribed rotary body of the polygonal body.

The axis directions of the air outlets 211 intersect, and the intersection point is located outside the bearing region, meaning that in the plane where the electrode stack 20 is located, the axis directions of the air outlets 211 are all inclined relative to the second direction X, so that the air ejected from the multiple air outlets 211 intersects outside the electrode stack 20, thereby stably and reliably blowing up the electrode stack 20 at the uppermost layer through the multiple air outlets 211. After air blowing, the electrode stack 20 at the uppermost layer does not form a negative pressure cavity with the electrode stack 20 adjacent thereto, which is more conducive to completely separating the two electrode stacks 20, reducing the risk of air blowing failure, and improving the reliability of smoothing the electrode stack 20.

Optionally, the air blowing assembly 2 further includes a connection pipeline and an air source, one end of the connection pipeline communicates with the air outlet 211, and the other end communicates with the air source, so as to supply air into the bearing region through the air blowing assembly 2. In addition, the air source may be a compressed air source, which can form a jet to be injected into the gap between the electrode stacks 20. This is more convenient for controlling the air path direction of the blown air, and can also reduce pollution and the impact on the environment and operators after air emission, improving the reliability of the stacking mechanism 10.

It can be understood that the air blowing assembly 2 including multiple air outlets 211 may be that the air blowing assembly 2 includes two air outlets 211, and the air outlets 211 are respectively disposed on both sides of the bearing region along the second direction X, or the air blowing assembly 2 includes three, four, or even five air outlets 211. Taking three air outlets 211 as an example, one air outlet 211 may be disposed on one side of the bearing region along the second direction X, and two air outlets 211 may be disposed on the other side. The specific number of the air outlets 211 can be adjusted according to the air blowing amount of a single air outlet 211 and the actual situation of the electrode stack 20 to be blown up, which can satisfy the balance of the air blowing amount of the air outlets 211 on both sides, and make the axis directions of the air outlets 211 on both sides intersect at one point.

In some optional embodiments, the stacking mechanism 10 further includes a limiting portion 121, and the limiting portion 121 is disposed on the support assembly 1, and partially blocks one side edge of the bearing region intersecting with the axis directions of the air outlets 211.

Since in the plane where the electrode stack 20 is located, the axis directions of the air outlets 211 are all inclined relative to the second direction X. For the electrode stack 20 at the uppermost layer, it receives a component force along the third direction Y, that is, the length direction of the electrode stack 20. Therefore, by partially blocking the limiting portion 121 on one side edge of the bearing region where the axis directions of the air outlets 211 intersect, when the air blowing assembly 2 injects air into the gap, the position of the electrode stack 20 at the uppermost layer along the third direction Y can be limited by the limiting portion 121, thereby improving the alignment accuracy between the electrode stack 20 and other stacks after the electrode stack 20 at the uppermost layer is smoothed, and improving the performance of the stacked cell.

Optionally, the limiting portion 121 can be used as the baffle of the stacking platform 12 on the stacking platform 12, so that the baffle of the stacking platform 12 can not only limit the electrode stack 20 of the middle piece when the composite material strip is freely stacked on the support assembly 1 to form multiple electrode stacks 20, but also limit the electrode stack 20 at the uppermost layer during air blowing, simplifying the structure and reducing costs.

Refer to FIG. 3 to FIG. 5. In some optional embodiments, in the second direction X, the air outlets 211 on both sides of the bearing region are symmetrically disposed, and the axis directions of the air outlets 211 are symmetric with respect to the bearing region.

That is, the number of air outlets 211 is even and they are separately disposed on both sides of the electrode stack 20 along the second direction X. The positions of the air outlets 211 on both sides and the axis directions of the air outlets 211 can be symmetrically disposed relative to the motor stack along the second direction X, which can simplify the arrangement of the air outlets 211, and is more conducive to forming a stable air blowing structure on both sides of the bearing region, improving the air blowing effect.

It can be understood that in some embodiments, the air blowing assembly 2 may be provided as an integral structure, and the connection channel of the air blowing assembly 2 at least partially extends to both sides of the bearing region along the second direction X, and is provided with air outlets 211 respectively on both sides of the bearing region along the second direction X. Alternatively, in some other embodiments, the air blowing assembly 2 includes multiple air blowing members 21, and the air blowing members 21 each have an air outlet 211.

That is, the air blowing assembly 2 can also be provided as multiple air blowing members 21 in a split manner, and each air blowing member 21 is provided with a separate connection channel and air source. Providing the air blowing assembly 2 as multiple air blowing members 21 in a split manner is more convenient to achieve separate control of each air blowing member 21, so as to achieve air blowing balance on both sides of the electrode stack 20.

Optionally, two air blowing members 21 may be provided and respectively disposed on both sides of the bearing region along the second direction X, and each air blowing member 21 may be provided with only one air outlet 211, or each air blowing member 21 may be provided with at least two air outlets 211.

Refer to FIG. 5. For example, two air blowing members 21 are provided and each air blowing member 21 is correspondingly provided with one air outlet 211. By controlling the position of the air outlet 211 along the third direction Y and the axis direction of the air outlet 211, the axis directions of the air outlets 211 can intersect, and the intersection point is located outside the bearing region.

The dimension of the bearing region along the third direction Y, that is, the length of the electrode stack 20, is a first dimension d1, the distance of the air outlet 211 from the limiting portion 121 along the third direction Y is a second dimension d2, and the dimension of the bearing region along the second direction X, that is, the width of the electrode stack 20 is a third dimension d3. An included angle θ between the axis direction of the air outlet 211 and the third direction Y should satisfy: 0 < θ ≤ arctan[d3/(2*d2)], and 0 < d2 ≤ d1, so as to make the axis directions of the air outlets 211 intersect and make the intersection point located outside the bearing region by controlling the position of the air outlet 211 along the third direction Y and the axis direction of the air outlet 211.

In some optional embodiments, the air blowing member 21 has a degree of freedom of movement along the third direction Y relative to the support assembly 1, and/or the air blowing member 21 is rotatably connected to the support assembly 1, and the axis direction of the air outlet 211 of the air blowing member 21 is adjustable.

By making the air blowing member 21 have a degree of freedom of movement along the third direction Y relative to the support assembly 1 and/or making the axis direction of the air outlet 211 adjustable, the position of the air blowing member 21 along the third direction Y and the axis direction of the air outlet 211 can be adjusted according to the specific size of the electrode stack 20, so that the axis directions of the air blowing members 21 intersect and the intersection point is located outside the electrode stack 20, thereby improving the applicability of the air blowing assembly 2.

Optionally, taking a specific embodiment as an example, one of the support assembly 1 and the air blowing member 21 may be provided with a groove, and the other is provided with a protrusion adapted to the groove. The groove and the protrusion extend along the third direction Y, so that the position adjustment of the air blowing member 21 relative to the support assembly 1 along the third direction Y can be achieved. In addition, a support rod may be fixedly disposed on the support assembly 1, and the air blowing member 21 is sleeved on the outer periphery of the support rod and rotatably cooperates with the support rod, so that the adjustment of the axis direction of the air outlet 211 can be achieved.

Refer to FIG. 3 to FIG. 5. In some optional embodiments, the pressing assembly 3 includes a driving member 31 and a pressing plate 32, and the driving member 31 is connected to the pressing plate 32 and drives the pressing plate 32 to move linearly relative to the support assembly 1 along the first direction Z, or the driving member 31 is connected to the pressing plate 32 and drives the pressing plate 32 to rotate toward or away from the support assembly 1.

The pressing assembly 3 is used for pressing the electrode stack 20 at the uppermost layer, so that the electrode stack 20 at the uppermost layer is smoothly attached to the electrode stack 20 adjacent thereto, thereby achieving smoothing of the electrode stack 20. For the pressing assembly 3, at least two pressing methods are provided. One is that the pressing assembly 3 can directly linearly press the pressing plate 32 onto the electrode stack 20 at the uppermost layer through the driving member 31, where the driving member 31 includes but is not limited to an electric push rod and a hydraulic cylinder. The other is that the pressing assembly 3 can control the pressing plate 32 to rotate through the driving member 31, so that the pressing plate 32 slaps and presses onto the electrode stack 20, achieving smoothing of the electrode stack 20.

For the slapping and pressing method, in some optional embodiments, the driving member 31 includes a driving portion 311 and a rotating shaft 312 disposed at an output end of the driving portion 311, the rotating shaft 312 is disposed on one side of the support assembly 1 along the third direction Y and extends along the second direction X, and the pressing plate 32 is connected to the rotating shaft 312. Along the third direction Y, each air blowing member 21 blows air from a side close to the rotating shaft 312 to a side away from the rotating shaft 312, the third direction Y intersecting the first direction Z and the second direction X.

Along the third direction Y, each air blowing member 21 blowing air from a side close to the rotating shaft 312 to a side away from the rotating shaft 312 means that the rotating shaft 312 is disposed at the corner between the electrode stack 20 at the uppermost layer and the electrode stack 20 adjacent thereto, so that in the process of the pressing plate 32 slapping and pressing onto the electrode stack 20 at the uppermost layer, the arrangement at the corner is more convenient to overcome the force of the air blowing assembly 2, and attach the electrode stack 20 at the uppermost layer to the electrode stack 20 adjacent thereto, improving the smoothing effect.

Optionally, the driving portion 311 may be provided as a driving motor, and the pressing plate 32 is fixedly connected to the rotating shaft 312, and can rotate toward or away from the support assembly 1 under the driving of the rotating shaft 312.

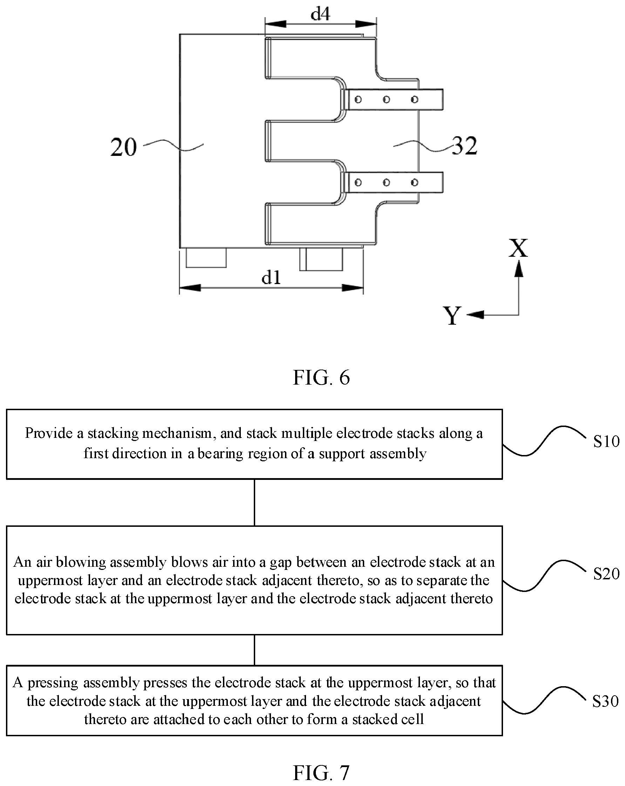

Referring to FIG. 6, FIG. 6 is a top view of a pressing assembly 3 provided in some embodiments of this application. In some optional embodiments, a ratio of a distance between an edge of the pressing plate 32 and the rotating shaft 312 to a dimension of the bearing region along the third direction Y is greater than or equal to 0.2.

It can be understood that the distance between the edge of the pressing plate 32 and the rotating shaft 312 is a fourth dimension d4. By making the ratio of the fourth dimension d4 to the first dimension d1 greater than or equal to 0.2, when the pressing plate 32 slaps and presses onto the electrode stack 20, the arching at the corner between the electrode stack 20 at the uppermost layer and the electrode stack 20 adjacent thereto can be smoothed, reducing the risk of wrinkling on the large surface of the electrode stack 20, and improving the smoothing reliability.

Optionally, the specific shape of the pressing plate 32 can be adjusted according to the specific structure of the stacking mechanism 10, and the pressing plate 32 can also be provided with a clearance portion to reduce interference between the pressing plate 32 and other structures of the stacking mechanism 10, improving the reliability of the pressing plate 32.

In some optional embodiments, the stacking mechanism 10 further includes a base 4, and the support assembly 1 is connected to the base 4 and has a degree of freedom of movement along the first direction Z relative to the base 4.

By moving the support assembly 1 along the first direction Z, the relative position of the electrode stack 20 at the uppermost layer and the pressing plate 32 along the first direction Z can be adjusted, thereby helping the pressing plate 32 to achieve slapping and pressing on the electrode stack 20, and improving the smoothing effect. Optionally, the stacking mechanism 10 may be provided with a lifting module, and the support assembly 1 is controlled to move relative to the base 4 along the first direction Z through the lifting module, to adjust the distance between the electrode stack 20 at the uppermost layer and the pressing plate 32 along the first direction Z.

Refer to FIG. 3 to FIG. 6. The specific structure of the stacking mechanism 10 in one embodiment of this application is described below in conjunction with the accompanying drawings.

The stacking mechanism 10 includes a support assembly 1, an air blowing assembly 2, and a pressing assembly 3. The support assembly 1 includes a bearing region, the air blowing assembly 2 includes air blowing members 21 disposed in pairs on both sides of the bearing region along the second direction X, the air blowing members 21 are provided with air outlets 211, the axis directions of the air outlets 211 of the air blowing members 21 on both sides intersect, and the intersection point is located outside the bearing region, so that the air blowing assembly 2 can blow air from both sides of the bearing region along the second direction X into the gap between the electrode stack 20 at the uppermost layer and the electrode stack 20 adjacent thereto through. Moreover, after air blowing, the electrode stack 20 at the uppermost layer does not form a negative pressure cavity with the electrode stack 20 adjacent thereto, which is more conducive to separating the vacuum bonded portion between the two electrode stacks 20 and separating the two along the first direction Z.

The pressing assembly 3 includes a driving portion 311, a rotating shaft 312, and a pressing plate 32. The rotating shaft 312 is disposed at an output end of the driving portion 311, and the pressing plate 32 is connected to the rotating shaft 312 and can rotate toward or away from the support assembly 1 under the driving of the rotating shaft 312, thereby pressing onto the electrode stack 20 at the uppermost layer. The pressing assembly 3 can overcome the force of the air blowing assembly 2 to smoothly press the electrode stack 20 at the uppermost layer onto the electrode stack 20 adjacent thereto, reducing or even eliminating wrinkling of the electrode stack 20 at the uppermost layer, improving the smoothing effect, and enhancing the performance of the stacked cell.

Refer to FIG. 7. Embodiments of this application further provide a stacking method, including the following steps:
S10. Provide the stacking mechanism 10 in the above embodiments, and stack multiple electrode stacks 20 along a first direction Z in a bearing region of a support assembly 1.
S20. An air blowing assembly 2 blows air into a gap between an electrode stack 20 at an uppermost layer and an electrode stack 20 adjacent thereto, so as to separate the electrode stack 20 at the uppermost layer and the electrode stack 20 adjacent thereto.
S30. A pressing assembly 3 presses the electrode stack 20 at the uppermost layer, so that the electrode stack 20 at the uppermost layer and the electrode stack 20 adjacent thereto are attached to each other to form a stacked cell.

As the air blowing assembly 2 blows air into the gap between the electrode stack 20 at the uppermost layer and the electrode stack 20 adjacent thereto before the pressing assembly 3 presses the electrode stack 20 at the uppermost layer, the vacuum bonded portion between the two electrode stacks 20 can be separated, and the electrode stack 20 at the uppermost layer and the electrode stack 20 adjacent thereto can be separated. Thereby, after the pressing assembly 3 smoothly presses the electrode stack 20 at the uppermost layer onto the electrode stack 20 adjacent thereto, wrinkling of the electrode stack 20 at the uppermost layer can be reduced or even eliminated, the smoothing effect can be improved, and the performance of the stacked cell can be enhanced.

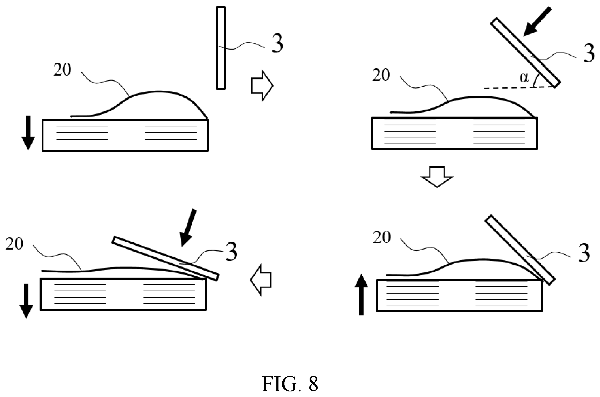

Refer to FIG. 7 and FIG. 8. FIG. 8 is a schematic diagram of steps in a stacking method provided in some embodiments of this application. In some optional embodiments, in the step of providing the stacking mechanism 10, the support assembly 1 has a degree of freedom of movement along the first direction Z, the pressing assembly 3 includes a driving member 31 and a pressing plate 32, and the driving member 31 is connected to the pressing plate 32 and drives the pressing plate 32 to rotate toward or away from the support assembly 1.

The step S30 that the pressing assembly 3 presses the electrode stack 20 at the uppermost layer includes:
controlling the pressing plate 32 to rotate toward the support assembly 1, so that a preset included angle α is formed between the pressing plate 32 and a plane where the support assembly 1 is located;
controlling the support assembly 1 to move toward the pressing plate 32 along the first direction Z until the electrode stack 20 at the uppermost layer comes into contact with the pressing plate 32; and
synchronously controlling the pressing plate 32 to rotate toward the support assembly 1 and controlling the support assembly 1 to move away from the pressing plate 32 along the first direction Z, and pressing, by the pressing plate 32, the electrode stack 20 at the uppermost layer until the pressing plate 32 is parallel to the plane where the support assembly 1 is located.

In the stacking mechanism 10 of embodiments of this application, the pressing plate 32 can be rotated by a preset angle first, and then the support assembly 1 is controlled to rise until the electrode stack 20 at the uppermost layer comes into contact with the pressing plate 32. During this process, the air blowing assembly 2 continuously blows air into the gap formed between the electrode stack 20 at the uppermost layer and the electrode stack 20 adjacent thereto. Then the pressing plate 32 continues to rotate, and the support assembly 1 synchronously descends to achieve slapping and pressing on the electrode stack 20 at the uppermost layer. This process stops when the pressing plate 32 is parallel to the plane where the support assembly 1 is located, forming a stacked cell.

Since a component force along the third direction Y is generated during the rotation of the pressing plate 32 toward the support assembly 1, compared with directly slapping and pressing the pressing plate 32 onto the electrode stack 20 at the uppermost layer, rotating the pressing plate 32 to the preset angle α first and then performing slapping and pressing can reduce the influence of the component force during the slapping and pressing process of the pressing plate 32 on the electrode stack 20 at the uppermost layer, further improving the reliability of smoothing.

It can be understood that in the actual stacking and smoothing process, air can be blown into the gap of the electrode stacks 20 immediately after stacking to form multiple electrode stacks 20, or air can be blown into the gap of the electrode stack 20 after the pressing plate 32 is controlled to rotate to the preset included angle or after the support assembly 1 is controlled to move toward the pressing plate 32 along the first direction Z. The air blowing process can be performed as long as the arching at the corner of the electrode stack 20 at the uppermost layer is smoothed and the two adjacent electrode stacks 20 are separated before the pressing plate 32 presses the electrode stack 20 at the uppermost layer.

In some optional embodiments, the preset included angle α is 20° to 70°.

By making the preset included angle α less than or equal to 70°, the influence of the component force during the slapping and pressing process of the pressing plate 32 on the electrode stack 20 at the uppermost layer can be reduced. And by making the preset included angle α greater than or equal to 20°, when the support assembly 1 rises until the electrode stack 20 at the uppermost layer comes into contact with the pressing plate 32, the electrode stack 20 at the uppermost layer only contacts the pressing plate 32 at the corner, while other regions are spaced from the pressing plate 32, improving the reliability of smoothing.

Optionally, the preset included angle α can be set to 20°. At this angle, the initial arching angle at the corner of the pressing plate 32 and the electrode stack 20 at the uppermost layer is basically consistent, which can maximize the reduction of the influence of the component force during the slapping and pressing process of the pressing plate 32 on the electrode stack 20 at the uppermost layer under the premise that other regions of the electrode stack 20 at the uppermost layer are spaced from the pressing plate 32.

Optionally, the preset included angle α can also be set to 45°, which has higher reliability.

Embodiments of this application provide a battery manufacturing device, including a compounding mechanism and the stacking mechanism 10 as in the above embodiments, where the compounding mechanism is configured for forming a composite material strip, and the stacking mechanism 10 is disposed downstream of the compounding mechanism, and is configured to press electrode stacks 20 formed by folding the composite material strip to form a stacked cell.

According to the battery manufacturing device of embodiments of this application, since it includes the stacking mechanism 10 in the above embodiments, it can smoothly press the electrode stack 20 at the uppermost layer onto the electrode stack 20 adjacent thereto, reducing or even eliminating wrinkling of the electrode stack 20 at the uppermost layer, improving the smoothing effect, and enhancing the performance of the stacked cell, thereby improving the performance of the manufactured battery, and facilitating promotion and application.

Finally, it should be noted that: the above embodiments are only used to illustrate the technical solutions of this application, and do not limit them. Although this application has been described in detail with reference to the foregoing embodiments, those of ordinary skill in the art should understand that: the technical solutions recorded in the foregoing embodiments can still be modified, or some or all of the technical features can be equivalently replaced. These modifications or replacements do not make the essence of the corresponding technical solutions depart from the scope of the technical solutions of the embodiments of this application, and they should all be covered within the scope of the claims and specification of this application. In particular, as long as there is no structural conflict, the technical features mentioned in the various embodiments can be combined in any manner. This application is not limited to the specific embodiments disclosed in the text, but includes all technical solutions falling within the scope of the claims.

## Claims

1. A stacking mechanism, comprising:
a support assembly having a bearing region, wherein the bearing region is configured to support multiple electrode stacks stacked along a first direction, and the electrode stack at an uppermost layer and an electrode stack adjacent thereto form a gap along the first direction;
an air blowing assembly disposed on the support assembly and configured to blow air into the gap from both sides of the bearing region along a second direction, so as to separate the electrode stack at the uppermost layer and the electrode stack adjacent thereto along the first direction, the second direction intersecting the first direction; and
a pressing assembly disposed opposite to at least part of the bearing region of the support assembly along the first direction, wherein the pressing assembly has a degree of freedom of movement along the first direction relative to the support assembly, to press and hold the electrode stack at the uppermost layer.

2. The stacking mechanism according to claim 1, wherein the air blowing assembly comprises multiple air outlets, the multiple air outlets are separately disposed on both sides of the bearing region along the second direction, axis directions of the air outlets intersect, and an intersection point is located outside the bearing region.

3. The stacking mechanism according to claim 2, wherein in the second direction, the air outlets on both sides of the bearing region are symmetrically disposed, and the axis directions of the air outlets are symmetric with respect to the bearing region.

4. The stacking mechanism according to claim 2 or 3, wherein the stacking mechanism further comprises a limiting portion, and the limiting portion is disposed on the support assembly, and partially blocks one side edge of the bearing region intersecting with the axis directions of the air outlets.

5. The stacking mechanism according to any one of claims 2 to 4, wherein the air blowing assembly comprises multiple air blowing members, and the air blowing members each have the air outlet.

6. The stacking mechanism according to any one of claims 1 to 5, wherein the pressing assembly comprises a driving member and a pressing plate, and the driving member is connected to the pressing plate and drives the pressing plate to move linearly relative to the support assembly along the first direction, or the driving member is connected to the pressing plate and drives the pressing plate to rotate toward or away from the support assembly.

7. The stacking mechanism according to claim 6, wherein the driving member comprises a driving portion and a rotating shaft disposed at an output end of the driving portion, the rotating shaft is disposed on one side of the support assembly along a third direction and extends along the second direction, and the pressing plate is connected to the rotating shaft; and
along the third direction, the air blowing assembly blows air from a side close to the rotating shaft to a side away from the rotating shaft, the third direction intersecting the first direction and the second direction.

8. The stacking mechanism according to claim 7, wherein a ratio of a distance between an edge of the pressing plate and the rotating shaft to a dimension of the bearing region along the third direction is greater than or equal to 0.2.

9. The stacking mechanism according to any one of claims 6 to 8, wherein the stacking mechanism further comprises a base, and the support assembly is connected to the base and has a degree of freedom of movement along the first direction relative to the base.

10. A stacking method, comprising:
providing the stacking mechanism according to claim 1, and stacking multiple electrode stacks along a first direction in a bearing region of a support assembly;
blowing, by an air blowing assembly, air into a gap between an electrode stack at an uppermost layer and an electrode stack adjacent thereto, so as to separate the electrode stack at the uppermost layer and the electrode stack adjacent thereto; and
pressing, by a pressing assembly, the electrode stack at the uppermost layer, so that the electrode stack at the uppermost layer and the electrode stack adjacent thereto are attached to each other to form a stacked cell.

11. The stacking method according to claim 10, wherein in the step of providing the stacking mechanism, the support assembly has a degree of freedom of movement along the first direction, the pressing assembly comprises a driving member and a pressing plate, and the driving member is connected to the pressing plate and drives the pressing plate to rotate toward or away from the support assembly; and
the step of pressing, by a pressing assembly, the electrode stack at the uppermost layer comprises:
controlling the pressing plate to rotate toward the support assembly, so that a preset included angle is formed between the pressing plate and a plane where the support assembly is located;
controlling the support assembly to move toward the pressing plate along the first direction until the electrode stack at the uppermost layer comes into contact with the pressing plate; and
synchronously controlling the pressing plate to rotate toward the support assembly and controlling the support assembly to move away from the pressing plate along the first direction, and pressing, by the pressing plate, the electrode stack at the uppermost layer until the pressing plate is parallel to the plane where the support assembly is located.

12. The stacking method according to claim 11, wherein the preset included angle is 20° to 70°.

13. A battery manufacturing device, comprising a compounding mechanism and the stacking mechanism according to any one of claims 1 to 9, wherein the compounding mechanism is configured for forming a composite material strip, and the stacking mechanism is disposed downstream of the compounding mechanism, and is configured to press electrode stacks formed by folding the composite material strip to form a stacked cell.
